# EUROPÄISCHE PATENTSCHRIFT

(11) **EP 1 921 370 B1**
(45) Veröffentlichungstag und Bekanntmachung des Hinweises auf die Patenterteilung: **20.08.2014**
(21) Anmeldenummer: 07020369.0
(22) Anmeldetag: 18.10.2007
(51) Int. Cl.: F16M 13/02, F16G 3/14

(54) **Kombination einer Befestigungsvorrichtung mit einem Lichtgitter**
Combination of a mounting device and a light curtain
Combinaison d'un dispositif de fixation et d'une barrière lumineuse

(30) Priorität: 10.11.2006 DE 102006053003
(43) Veröffentlichungstag der Anmeldung: 14.05.2008
(73) Patentinhaber: Leuze electronic GmbH + Co. KG, 73277 Owen/Teck (DE)
(72) Erfinder: Tull, Andreas, 82205 Gilching (DE); Jüttner, Andreas, 81543 München (DE)
(74) Vertreter: Ruckh, Rainer Gerhard

(56) Entgegenhaltungen:
- EP-A1- 0 928 923
- DE-U1-202005 016 936
- US-A1- 2003 106 992

## Beschreibung

Die Erfindung betrifft eine Kombination einer Befestigungsvorrichtung mit einem Lichtgitter.

Ein Lichtgitter der in Rede stehenden Art ist aus der DE 20 2004 003 810 U1 bekannt. Das dort beschriebene Lichtgitter bildet eine berührungslos wirkende Schutzeinrichtung und dient zur Überwachung von Objekten in einem Überwachungsbereich. Das Lichtgitter weist eine Sendereinheit und eine Empfängereinheit auf, die in einem Gehäuse oder in zwei separaten Gehäusen angeordnet sind. Die Sendereinheit umfasst eine Anordnung von Sendelichtstrahlen emittierenden Sendern, die Empfängereinheit eine Anordnung von Empfängern.

Ein Gehäuse zur Aufnahme der Sender und/oder Empfänger umfasst einen Hohlprofilkörper, der stirnseitig mit wenigstens einer Verschlusskappe abgeschlossen ist. Der Hohlprofilkörper dient zur Aufnahme der Sender und/oder Empfänger. In der dem Überwachungsbereich zugewandten Längsseite des Hohlprofilkörpers befindet sich eine Öffnung, in welche ein Austrittsfenster eingesetzt und dort fixiert ist. Durch dieses Austrittsfenster werden die von den Sendern emittierten Sendelichtstrahlen beziehungsweise die aus dem Überwachungsbereich in Richtung der Empfänger verlaufenden Sendelichtstrahlen geführt.

Um ein Gehäuse eines solchen Lichtgitters justierbar an einer Unterlage, insbesondere seitlich an einer Wand oder dergleichen zu befestigen, werden typischerweise Befestigungsvorrichtungen mit Drehhalterungen eingesetzt, in welchen das Gehäuse des Lichtgitters bezüglich seiner Längsachse zu Justagezwecken gedreht werden kann und nach erfolgter Ausrichtung an dieser fixiert werden kann. Typischerweise können in diesem Fall die Verschlusskappen des Gehäuses des Lichtgitters als Aufnahmen für diese Drehhalterungen ausgebildet sein. Nachteilig hierbei ist, dass die Verschlusskappen hierzu entsprechend groß dimensioniert sein müssen. Weiterhin müssen die Verschlusskappen sehr robust und stabil ausgelegt werden, damit diese die bei der Fixierung an der Drehhalterung auftretenden Kräfte aufnehmen können. Dies bedingt eine unerwünscht große und schwere Bauform der Verschlusskappen, die nicht nur die Dimensionen des Lichtgitters vergrößert sondern auch zu einer Erhöhung der Herstellkosten des Lichtgitters führt.

Die US 2003/0106992 A1 betrifft eine Befestigungsvorrichtung für ein Lichtgitter gemäß dem Oberbegriff des Anspruchs 1. In einer Ausführungsform weist die Befestigungsvorrichtung eine halbringförmige Aufnahme auf, die an abgerundeten Ecken des Gehäuses anlegbar ist. An den beiden freien Enden der Aufnahme befinden sich Klauen, die in Langlöcher des Gehäuses greifen, wodurch die Aufnahme höhenverstellbar aber nicht drehbar am Gehäuse ist.

Die EP 0 928 923 A1 beschreibt eine Befestigungsvorrichtung für ein Lichtgitter, welche eine Scheibe aufweist, die auf eine Stirnseite des Gehäuses des Lichtgitters aufgesetzt wird. In die Scheibe sind konzentrische, kreisbogenförmige Löcher eingebracht. In diese werden Schrauben eingeführt, um die Scheibe am Gehäuse zu fixieren. Bei gelockerten Schrauben kann zu Justagezwecken das Gehäuse relativ zur Befestigungsvorrichtung gedreht werden.

Der Erfindung liegt die Aufgabe zugrunde eine Befestigungsvorrichtung der eingangs genannten Art bereitzustellen, mittels derer eine einfache und kostengünstige Befestigung und Justage eines Lichtgitters ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft eine Kombination einer Befestigungsvorrichtung mit einem Lichtgitter, dessen Komponenten in wenigstens einem Gehäuse integriert sind. Die Befestigungsvorrichtung umfasst eine Drehhalterung mit wenigstens einem ringförmigen Befestigungselement, wobei wenigstens Segmente der Kanten des wenigstens einen Gehäuses des Lichtgitters Abrundungen aufweisen. Diese bilden eine rotationssymmetrische Anordnung und eine Aufnahme für das Befestigungselement derart, dass bei an der Drehhalterung fixiertem Gehäuse die Innenwand des ringförmigen Befestigungselements direkt an den Abrundungen anliegt. Durch die rotationssymmetrische Anordnung der Abrundungen und der ringförmigen Befestigungselemente ist das jeweilige Gehäuse zu Justagezwecken in der Drehhalterung liegend durch Drehen justierbar und dann durch ein Anziehen der Befestigungselemente lagefixierbar.

Die Abrundungen an dem oder den Gehäusen des Lichtgitters bilden einfach und kostengünstig herstellbare Aufnahmen für die Drehhalterungen. Besonders vorteilhaft weist das oder jedes Gehäuse einen mit Verschlusskappe verschließbaren Hohlprofilkörper auf, in welchem die Sensorelemente des Lichtgitters bildenden Sender und/oder Empfänger gelagert sind, wobei die die Aufnahmen bildenden Abrundungen an diesen Hohlprofilkörpern angeordnet sind.

Das oder die Gehäuse des Lichtgitters beziehungsweise dessen Hohlprofilkörper weisen eine hohe Stabilität auf. Insbesondere die Hohlprofilkörper können dabei in Form von Metall-Druckgussteilen gebildet sein, die eine hohe mechanische Belastbarkeit aufweisen. Somit brauchen an den Gehäusen beziehungsweise Hohlprofilkörpern nur die Abrundungen an deren Kanten vorgesehen werden, um die Aufnahmen für die Befestigungselemente der Drehhalterung auszubilden. Zusätzliche konstruktive Maßnahmen zur Erhöhung der Stabilität im Bereich der Aufnahmen sind nicht erforderlich.

Die Ausbildung der Abrundungen der Kanten der Gehäuse beziehungsweise der Hohlprofilkörper erfolgt derart, dass diese auf einer kreiszylindrischen Mantelfläche liegen. Die hieran angepassten kreisförmigen Befestigungselemente der Drehhalterung können durch einfaches Aufstecken auf das jeweilige Gehäuse beziehungsweise dessen Hohlprofilkörper auf die von diesen Abrundungen gebildete Aufnahme aufgesteckt werden. Durch die rotationssymmetrische Anordnung der Abrundungen und der ringförmigen Befestigungselemente kann das jeweilige Gehäuse zu Justagezwecken in der Drehhalterung liegend durch Drehen justiert werden und dann durch ein Anziehen der Befestigungselemente lagefixiert werden.

Die Gehäuse eines Lichtgitters und insbesondere dessen Hohlprofilkörper weisen bevorzugt einen rechteckigen oder quadratischen Querschnitt auf. In beiden Fällen können an den längsseitigen Kanten des jeweiligen Gehäuses beziehungsweise Hohlprofilkörpers die eine Aufnahme bildenden Abrundungen so ausgebildet werden, dass diese auf einer kreisförmigen Mantelfläche liegen, so dass mit dieser Aufnahme das Lichtgitter in einem ringförmigen Befestigungselement drehbar zu Justagezwecken gelagert und dann in der jeweiligen Sollposition fixiert werden kann.

Die von den Abrundungen gebildeten Aufnahmen können in unterschiedlicher Anzahl und an unterschiedlichen Anbringungsorten am jeweiligen Gehäuse vorgesehen werden. Dadurch kann die Befestigungsvorrichtung an die jeweilige Größe des Gehäuses optimal angepasst werden. Beispielsweise können die Aufnahmen an den längsseitigen Rändern des Gehäuses beziehungsweise des Hohlprofilkörpers vorgesehen sein. Alternativ können die Kanten des Gehäuses beziehungsweise Hohlprofilkörpers über deren gesamte Längen abgerundet sein. Dann kann ein Befestigungselement prinzipiell in beliebigen Höhenlagern des Gehäuses oder Hohlprofilkörpers montiert werden. Dabei wird in jedem Fall ein Befestigungselement an einer Aufnahme so angebracht, dass dieses nicht im Bereich eines Senders oder Empfängers liegt, so dass der Strahleingang der Sendelichtstrahlen von einem Sender zu einem zugeordneten Empfänger durch ein Befestigungselement nicht blockiert wird.

Die Erfindung wird im Nachstehenden anhand der Zeichnung erläutert. Es zeigen:
- Figur 1:: Ausführungsbeispiel eines Lichtgitters mit einer Sendereinheit und Empfängereinheit in getrennten Gehäusen.
- Figur 2:: Perspektivische Darstellung der Komponenten einer Befestigungsvorrichtung für das Lichtgitter gemäß Figur 1.
- Figur 3a:: Querschnitt durch einen Hohlprofilkörper eines Gehäuses für ein Lichtgitter mit quadratischem Querschnitt.
- Figur 3b:: Querschnitt durch einen Hohlprofilkörper eines Gehäuses für ein Lichtgitter mit rechteckigem Querschnitt.

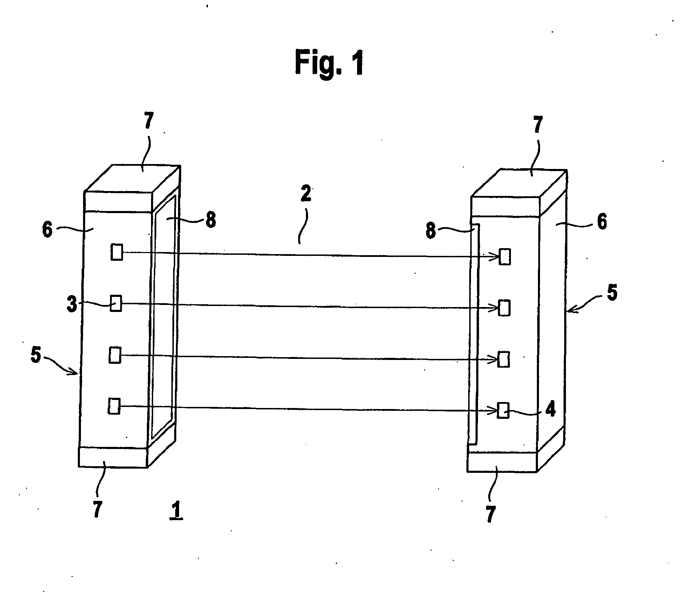

Figur 1 zeigt schematisch ein Lichtgitter 1 zur Erfassung von Objekten in einem Überwachungsbereich. Das Lichtgitter 1 umfasst eine Anordnung von Sendelichtstrahlen 2 emittierenden Sendern 3, die mit einer nicht dargestellten Steuereinheit zyklisch einzeln nacheinander aktiviert werden. Die Empfängereinheit umfasst eine Anordnung von Empfängern 4 zum Empfang der Sendelichtstrahlen 2. Den Empfängern 4 ist eine ebenfalls nicht dargestellte Auswerteeinheit zur Steuerung des Empfängerbetriebs und zur Auswertung der an den Ausgängen anstehenden Empfangssignale zugeordnet. Wie aus Figur 1 ersichtlich, sind die Sendereinheit und die Empfängereinheit in separaten Gehäusen 5 an gegenüberliegenden Rändern des Überwachungsbereichs angeordnet. Dabei ist jedem Sender 3 jeweils ein Empfänger 4 zugeordnet, so dass bei freiem Überwachungsbereich die vom Sender 3 emittierten Sendelichtstrahlen 2 auf den Empfänger 4 treffen. Bei einem Objekteingriff in den Überwachungsbereich wird der Strahlengang der Sendelichtstrahlen 2 wenigstens eines Senders 3 unterbrochen. Durch die dadurch bedingte Änderung der Empfangssignale wird in der Auswerteeinheit so eine Objektmeldung generiert.

Das Lichtgitter 1 gemäß Figur 1 weist relativ große Abstände zwischen jeweils benachbarten Sendern 3 beziehungsweise Empfängern 4 auf, die Auflösung des Lichtgitters 1 ist daher entsprechend gering, da die Mindestgröße von mit dem Lichtgitter 1 noch erfassbaren Objekten, die im wesentlichen durch den Abstand zweier benachbarter Sender 3 beziehungsweise Empfänger 4 definiert ist, relativ groß ist. Derartig ausgebildete Lichtgitter 1 werden üblicherweise als Lichtvorhänge bezeichnet. Generell kann das Lichtgitter 1 jedoch auch eine höhere Auflösung aufweisen.

Alternativ zu der Ausführungsform gemäß Figur 1 können die Sender 3 und Empfänger 4 auch in einem gemeinsamen Gehäuse 5 integriert sein, welches an einem Rand des Überwachungsbereichs angeordnet ist. Am gegenüberliegenden Rand des Überwachungsbereichs ist dann ein Reflektor angeordnet, wobei bei freiem Überwachungsbereich die von den Sendern 3 emittierten Sendelichtstrahlen 2 am Reflektor reflektiert und von dort auf die Empfänger 4 geführt sind.

Je nach Anwendungsfall kann das Lichtgitter 1 eine unterschiedliche Anzahl von Sendern 3 und Empfängern 4 aufweisen. Dementsprechend können auch die Höhen der Gehäuse 5 variieren.

Um eine möglichst einfache Variation der Gehäuse 5 durchführen zu können, besteht jedes Gehäuse 5 aus einem Hohlprofilkörper 6, welcher an seinen offenen Stirnseiten jeweils mit einer Verschlusskappe 7 verschlossen ist. Der metallische Hohlprofilkörper 6 wird in Strangpresstechnik hergestellt und kann durch einfaches Zuschneiden in der gewünschten Länge hergestellt werden.

Wie aus Figur 1 ersichtlich, weist jedes Gehäuse 5 in einer Längsseite, welche die dem Überwachungsbereich zugewandte Frontseite des Lichtgitters 1 bildet, eine Öffnung auf, in welche ein Austrittsfenster 8 eingesetzt ist. Durch dieses Austrittsfenster 8 werden die Sendelichtstrahlen 2 geführt.

Figur 1 zeigt die Gehäuse 5 des Lichtgitters 1 in ihrer Sollposition. In dieser Sollposition können diese an Wänden eines Gebäudes oder dergleichen befestigt werden.

In dieser Sollposition sind die Längsachsen der Gehäuse 5 des Lichtgitters 1 in vertikaler Richtung orientiert. Prinzipiell können die Längsachsen des Lichtgitters 1 auch in horizontaler Richtung orientiert sein.

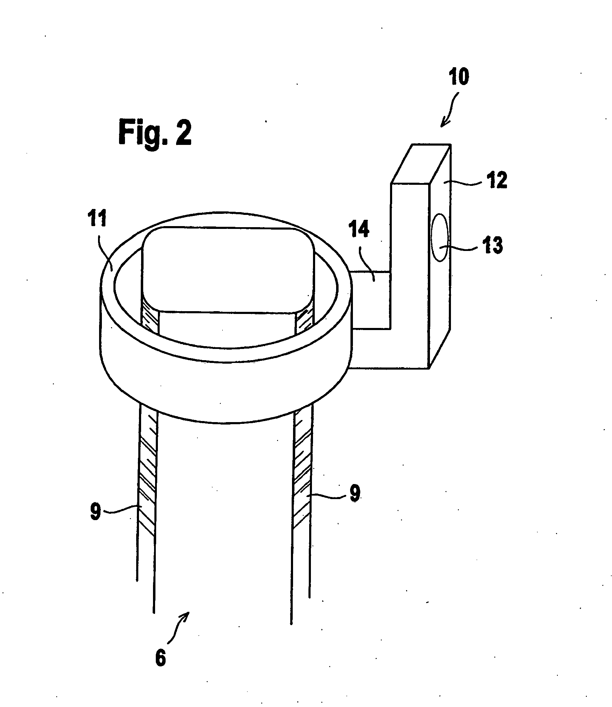

Figur 2 zeigt Komponenten einer Befestigungsvorrichtung, mittels derer eine derartige Wandmontage eines Lichtgitters 1 durchführbar ist. Dabei ist in Figur 2 die Oberseite eines Hohlprofilkörpers 6 eines Gehäuses 5 des Lichtgitters 1 gemäß Figur 1 bei abgenommener Verschlusskappe 7 dargestellt.

Wie aus Figur 2 und auch aus Figur 1 ersichtlich weist der Hohlprofilkörper 6 einen quadratischen Querschnitt auf. Im Bereich des oberen Randes des Hohlprofilkörpers 6 sind dessen in Längsrichtung verlaufende Kanten abgerundet. Die Abrundungen 9 erstrecken sich jeweils über identische Bereiche der Kanten und sind auch von der Formgebung identisch ausgebildet.

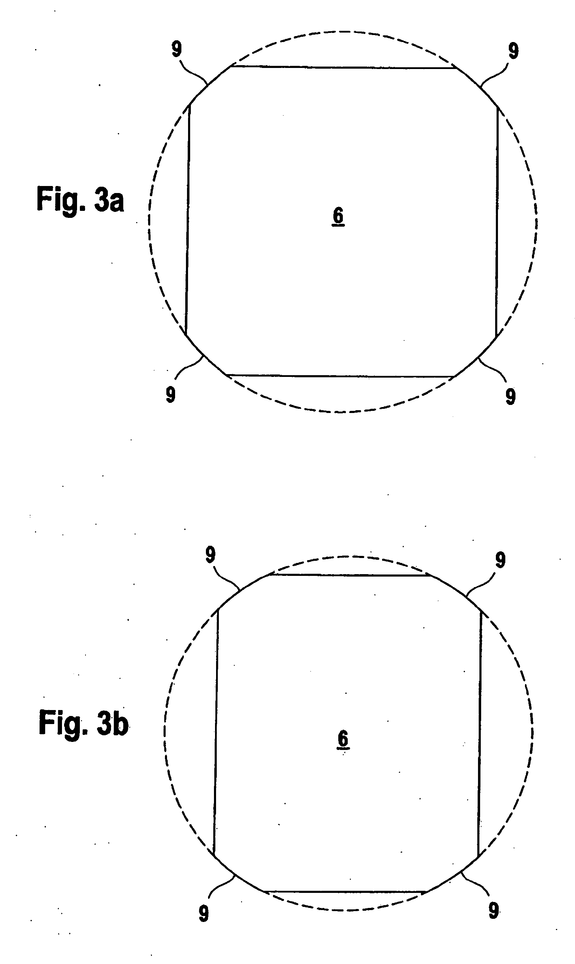

Figur 3a zeigt die Konturen dieser Abrundungen 9. Wie in der Querschnittsdarstellung der Figur 3a dargestellt, liegen die in einer horizontalen Ebene verlaufenden Schnittlinien der Abrundungen 9 auf einem Kreis, dessen Mittelpunkt im Zentrum des Hohlprofilkörpers 6 liegt. Die Abrundungen 9 der Kanten weisen in Längsrichtung des Hohlprofilkörpers 6 jeweils eine konstante Form auf, so dass die Abrundungen 9 auf einer kreiszylindrischen, konzentrisch zur Symmetrieachse des Hohlprofilkörpers 6 orientierten Mantelfläche liegen.

Anstelle eines quadratischen Querschnitts, wie in Figur 3a dargestellt, kann der Hohlprofilkörper 6 auch einen rechteckigen Querschnitt aufweisen. Ein derartiger Hohlprofilkörper 6 ist in Figur 3b dargestellt. Wie aus dieser Darstellung ersichtlich können auch in diesem Fall die Abrundungen 9 so ausgebildet sein, dass diese auf einer kreiszylindrischen Mantelfläche liegen.

Die so ausgebildeten Abrundungen 9 bilden eine Aufnahme für ein Befestigungselement 10, welches wie die Aufnahme selbst Bestandteil der Befestigungsvorrichtung ist. Das Befestigungselement 10 besteht aus einem Ring 11 und einem seitlich an diesen anschließenden plattenförmigen Befestigungssegment 12 mit eine Bohrung 13. Zwischen dem Befestigungselement 10 und dem Ring 11 liegt ein Steg 14 als Abstandshalter zwischen diesen beiden Komponenten des Befestigungselements 10. In die Bohrung 13 kann eine nicht dargestellte Schraube eingeführt werden, mittels derer das Befestigungselement 10 an einer Unterlage in Form eines Wandsegments oder einer an diesem angeordneten, nicht dargestellten Platte als weiterem Element der Befestigungsvorrichtung befestigt werden kann, wobei dann die Unterseite des Befestigungselements 10 dicht an dem Wandsegment oder der Platte anliegt.

Zur Montage des Lichtgitters 1 wird das Befestigungselement 10 an der Unterlage fixiert und dann der Ring 11 des Befestigungselements 10 auf den Hohlprofilkörper 6 aufgesetzt, so dass der Ring 11 wie in Figur 2 dargestellt die von den Abrundungen 9 gebildet Aufnahme umschließt. Der Innendurchmesser des Rings 11 ist dabei einstellbar, wobei dieser hierzu beispielsweise in Form einer Schelle ausgebildet ist. Zunächst wird der Ring 11 nur soweit zusammengezogen, dass der Hohlprofilkörper 6 zur Justage des Lichtgitters 1 noch gedreht werden kann. Da die Abrundungen 9 der Aufnahme entlang einer kreiszylindrischen Mantelfläche verlaufen, ist eine solche Drehung des Hohlprofilkörpers 6 bei in dem Ring 11 liegender Aufnahme möglich. Zur Lagefixierung des Gehäuses 5 in der jeweiligen Sollposition wird dann der Ring 11 weiter zusammengezogen, so dass dieser an der Aufnahme festgeklemmt ist.

Die Ausdehnungen der Abrundungen 9 der Kanten des Hohlprofilkörpers 6 in dessen Längsrichtung sind größer als die Breite des Ringes 11 des Befestigungselements 10. Dadurch ist gewährleistet, dass der Ring 11 vollständig im Bereich der Abrundungen 9 liegt, wobei die Höhenlage des Rings 11 an der von den Abrundungen 9 gebildeten Aufnahme sogar noch variiert werden kann.

Die Verschlusskappen 7 für den Hohlprofilkörper 6 gemäß Figur 2 sind bevorzugt derart ausgebildet, dass diese nicht seitlich über den Hohlprofilkörper 6 und insbesondere über die Abrundungen 9 hervorstehen. Dann kann bei auf den Hohlprofilkörper 6 aufgesetzten Verschlusskappen 7 der Ring 11 des Befestigungselements 10 auf den Hohlprofilkörper 6 aufgesetzt werden.

Durch die Anbringung der die Aufnahme bildenden Abrundungen 9 am oberen Rand des Hohlprofilkörpers 6 liegt die Aufnahme oberhalb des obersten Senders 3 beziehungsweise Empfängers 4, so dass der Strahlengang der Sendelichtstrahlen 2 zwischen den Sendern 3 und Empfängern 4 durch die Befestigungsvorrichtung nicht behindert wird.

Insbesondere bei Lichtgittern 1 mit kurzen Gehäusen 5 ist ein Befestigungselement 10 an einem längsseitigen Rand des Gehäuses 5 zur Fixierung des Lichtgitters 1 ausreichend.

Insbesondere für Lichtgitter 1 mit längeren Gehäusen 5 ist es zweckmäßig das jeweilige Gehäuse 5 an beiden längsseitigen Enden mit einem Befestigungselement 10 zu lagern. Dann ist an beiden längsseitigen Enden des Hohlprofilkörpers 6 jeweils eine von Abrundungen 9 gemäß Figur 2 gebildete Aufnahme vorsehen. Auf diese werden die Ringe 11 von Bedienelementen wie in Figur 2 dargestellt aufgesetzt.

Prinzipiell kann die Befestigungsvorrichtung gemäß Figur 2 auch dahingehend weitergebildet sein, dass sich die Abrundungen 9 über die gesamten Längen der Kanten des Hohlprofilkörpers 6 erstrecken. Dann kann ein Befestigungselement 10 in beliebigen Höhenlagen am Hohlprofilkörper 6 montiert werden. Dabei ist bei der Montage des Befestigungselements 10 jedoch darauf zu achten, dass der Ring 11 des Befestigungselements 10 im Bereich zwischen zwei benachbarten Sendern 3 oder Empfängern 4 montiert wird, so dass das Befestigungselement 10 den Strahlengang der Sendelichtstrahlen 2 nicht blockiert. Voraussetzung für diese Montage des Befestigungselements 10 am Hohlprofilkörper 6 ist, dass die Breite des Rings 11 des Befestigungselements 10 kleiner ist, als der Abstand zweier benachbarter Sender 3 oder Empfänger 4 in dem Hohlprofilkörper 6, an welchen das Befestigungselement 10 montiert wird.

### Bezugszeichenliste

- (1): Lichtgitter
- (2): Sendelichtstrahlen
- (3): Sender
- (4): Empfänger
- (5): Gehäuse
- (6): Hohlprofilkörper
- (7): Verschlusskappe
- (8): Austrittsfenster
- (9): Abrundungen
- (10): Befestigungselement
- (11): Ring
- (12): Befestigungssegment
- (13): Bohrung
- (14): Steg

## Patentansprüche

1. Kombination einer Befestigungsvorrichtung mit einem Lichtgitter (1), dessen Komponenten in wenigstens einem Gehäuse (5) integriert sind, umfassend eine Drehhalterung mit wenigstens, einem Befestigungselement (10), wobei das Befestigungselement (10) einen Ring (11) mit einstellbarem Innendurchmesser aufweist **dadurch gekennzeichnet, dass** das Befestigungselement (10) weiter ein seitlich an den Ring (11) anschließendes Befestigungssegment (12) aufweist, dass wenigstens Segmente der Kanten des wenigstens einen Gehäuses (5) des Lichtgitters (1) Abrundungen (9) aufweisen, welche eine rotationssymmetrische Anordnung und eine Aufnahme für den Ring (11) des Befestigungselements (10) derart bilden, dass bei an der Drehhalterung fixiertem Gehäuse (5) die Innenwand des Rings (11) des Befestigungselements (10) direkt an den Abrundungen (9) anliegt, wobei durch die rotationssymmetrische Anordnung der Abrundungen und des Rings (11) des Befestigungselements (10) das jeweilige Gehäuse (5) zu Justagezwecken in der Drehhalterung liegend durch Drehen justierbar ist und dann durch Zusammenziehen des Rings (11) des Befestigungselements (10) lagefixierbar ist.

2. Kombination einer Befestigungsvorrichtung nach Anspruch 1, **dadurch gekennzeichnet, dass** das wenigstens eine Gehäuse (5) des Lichtgitters (1) einen Hohlprofilkörper (6) aufweist, an dessen Kanten die die wenigstens eine Aufnahme bildenden Abrundungen (9) vorgesehen sind.

3. Kombination einer Befestigungsvorrichtung nach Anspruch 2, **dadurch gekennzeichnet, dass** das Lichtgitter (1) eine Reihenanordnung von Sendelichtstrahlen (2) emittierenden Sendern (3) und eine Reihenanordnung von den Sendern (3) zugeordneten Empfängern (4) aufweist, die in dem Hohlprotilkörper (6) des wenigstens einen Gehäuses (5) integriert sind.

4. Kombination einer Befestigungsvorrichtung nach Anspruch 3, **dadurch gekennzeichnet, dass** das Lichtgitter (1) zwei Gehäuse (5) mit jeweils einem Hohlprofilkörper (6) aufweist, wobei in einem Gehäuse (5) eine Reihenanordnung von Sendern (3) und im anderen Gehäuse (5) eine Reihenanordnung von Empfängern (4) angeordnet ist.

5. Kombination einer Befestigungsvorrichtung nach einem der Ansprüche 3 oder 4, **dadurch gekennzeichnet, dass** die Sender (3) und Empfänger (4) jeweils in Längsrichtung des jeweiligen Hohlprofilkörpers (6) in Abstand hintereinander angeordnet sind, und dass Abrundungen (9) einer Aufnahme in einer senkrecht zur Längsrichtung des Hohlprofilkörpers (6) liegenden Ebene angeordnet sind.

6. Kombination einer Befestigungsvorrichtung nach Anspruch 5, **dadurch gekennzeichnet, dass** die die Aufnahmen bildenden Abrundungen (9) an den längsseitigen Rändern des oder jedes Hohlprofilkörpers (6) angeordnet sind.

7. Kombination einer Befestigungsvorrichtung nach Anspruch 6, **dadurch gekennzeichnet, dass** sich die die Aufnahmen bildenden Abrundungen (9) jeweils über die gesamten Längen des oder jedes Hohlprofilkörpers (6) erstrecken.

8. Kombination einer Befestigungsvorrichtung nach einem der Ansprüche 4 bis 7, **dadurch gekennzeichnet, dass** an den längsseitigen Rändern des oder jedes Hohlprofilkörpers (6) ausmündende Öffnungen jeweils mit einer Verschlusskappe (7) abschließbar sind.

9. Kombination einer Befestigungsvorrichtung nach Anspruch 8, **dadurch gekennzeichnet, dass** die Außendurchmesser der Verschlusskappe (7) so dimensioniert sind, dass diese nicht seitlich über den jeweiligen Hohlprofilkörper (6) hervorstehen.

10. Kombination einer Befestigungsvorrichtung nach einem der Ansprüche 1 bis 9, **dadurch gekennzeichnet, dass** die eine Aufnahme bildenden Abrundungen (9) auf einer kreiszylindrischen Mantelfläche liegen.

11. Kombination einer Befestigungsvorrichtung nach Anspruch 10, **dadurch gekennzeichnet, dass** die an einem Hohlprofilkörper (6) des Gehäuses (5) vorgesehenen, eine Aufnahme bildenden Abrundungen (9) konzentrisch zur Längsachse des Hohlprofilkörpers (6) angeordnet sind.

12. Kombination einer Befestigungsvorrichtung nach einem der Ansprüche 1 bis 11, **dadurch gekennzeichnet, dass** der Hohlprofilkörper (6) eines Gehäuses (5) einen quadratischen Querschnitt aufweist.

13. Kombination einer Befestigungsvorrichtung nach einem der Ansprüche 1 bis 11, **dadurch gekennzeichnet, dass** der Hohlprofilkörper (6) eines Gehäuses (5) einen rechteckigen Querschnitt aufweist.

14. Kombination einer Befestigungsvorrichtung nach einem der Ansprüche 1 bis 13, **dadurch gekennzeichnet, dass** die Ausdehnung der eine Aufnahme bildenden Abrundungen (9) in Längsrichtung des Hohlprofilkörpers (6) mindestens der Breite des Rings (11) des Befestigungselements (10) entspricht.

15. Kombination einer Befestigungsvorrichtung nach einem der Ansprüche 1 bis 14, **dadurch gekennzeichnet, dass** der oder jeder Ring (11) eines Befestigungselements (10) mit vorgegebenem Anpressdruck an einer von den Abrundungen (9) gebildeten Aufnahme gehalten ist.

16. Kombination einer Befestigungsvorrichtung nach Anspruch 15, **dadurch gekennzeichnet, dass** das oder jedes Ring (11) eines Befestigungselements (10) eine Schelle aufweist.

17. Kombination einer Befestigungsvorrichtung nach einem der Ansprüche 1 bis 16, **dadurch gekennzeichnet, dass** das oder die Befestigungselemente (10) an einer Unterlage fixierbar sind.

## Claims

1. Combination of a fastening device with a light curtain (1), the components of which are integrated in at least one housing (5), comprising a rotary mounting with at least one fastening element (10), wherein the fastening element (10) comprises a ring (11) with a settable inner diameter, **characterised in that** the fastening element (10) further comprises a fastening segment (12) laterally connected with the ring (11), that at least segments of the edges of the at least one housing (5) of the light curtain (1) have radiusings (9) which so form a rotationally symmetrical arrangement and a mount for the ring (11) of the fastening element (10) that when the housing (5) is fixed to the rotary mounting the inner wall of the ring (11) of the fastening element (10) bears directly against the radiusings (9), wherein through the rotationally symmetrical arrangement of the radiusings and of the ring (11) of the fastening element (10) the respective housing (5) is for adjustment purposes adjustable by rotation while lying in the rotary mounting and is then positionally fixable by drawing together the ring (11) of the fastening element (10).

2. Combination of a fastening device according to claim 1, **characterised in that** the at least one housing (5) of the light curtain (1) comprises a hollow profile body (6), at the edges of which the radiusings (9) forming the at least one mount are provided.

3. Combination of a fastening device according to claim 2, **characterised in that** the light curtain (1) comprises a series arrangement of transmitters (3) emitting transmitted light beams (2) and a series arrangement of receivers (4) which are associated with the transmitters (3) and which are integrated in the hollow profile body (6) of the at least one housing (5).

4. Combination of a fastening device according to claim 3, **characterised in that** the light curtain (1) comprises two housings (5) each with a respective hollow profile body (6), wherein a series arrangement of transmitters (3) is arranged in one housing (5) and a series arrangement of receivers (4) is arranged in the other housing.

5. Combination of a fastening device according to one of claims 3 and 4, **characterised in that** the transmitters (3) and receivers (4) are respectively arranged at a spacing in succession in the longitudinal direction of the respective hollow profile body (6) and that radiusings (9) of a mount are arranged in a plane lying perpendicularly to the longitudinal direction of the hollow profile body (6).

6. Combination of a fastening device according to claim 5, **characterised in that** the radiusings (9) forming the mounts are arranged at the longitudinal-side edges of the or each hollow profile body (6).

7. Combination of a fastening device according to claim 6, **characterised in that** the radiusings (9) forming the mounts respectively extend over the entire length of the or each hollow profile body (6).

8. Combination of a fastening device according to any one of claims 4 to 7, **characterised in that** openings which open at the longitudinal-side edges of the or each hollow profile body (6) are each closable by a respective closure cap (7).

9. Combination of a fastening device according to claim 8, **characterised in that** the outer diameters of the closure cap (7) are so dimensioned that these do not protrude laterally beyond the respective hollow profile body (6).

10. Combination of a fastening device according to any one of claims 1 to 9, **characterised in that** the radiusings (9) forming a mount lie on a circularly cylindrical circumferential surface.

11. Combination of a fastening device according to claim 10, **characterised in that** the radiusings (9) provided at a hollow profile body (6) of the housing (5) and forming a mount are arranged concentrically with the longitudinal axis of the hollow profile body (6).

12. Combination of a fastening device according to any one of claims 1 to 11, **characterised in that** the hollow profile body (6) of a housing (5) has a square cross-section.

13. Combination of a fastening device according to any one of claims 1 to 11, **characterised in that** the hollow profile body (6) of a housing (5) has a rectangular cross-section.

14. Combination of a fastening device according to any one of claims 1 to 13, **characterised in that** the length of the radiusings (9), which form a mount, in the longitudinal direction of the hollow profile body (6) correspond at least with the width of the ring (11) of the fastening element (10).

15. Combination of a fastening device according to any one of claims 1 to 14, **characterised in that** the or each ring (11) of a fastening element (10) is held by a predetermined pressing pressure against a mount formed by the radiusings (9).

16. Combination of a fastening device according to claim 15, **characterised in that** the or each ring (11) of a fastening element (10) comprises a clamp.

17. Combination of a fastening device according to any one of claims 1 to 16, **characterised in that** the fastening element or elements (10) is or are fixable to a substrate.

## Revendications

1. Combinaison d'un dispositif de fixation et d'une barrière immatérielle (1) dont les composants sont intégrés dans au moins un boîtier (5), comprenant un support rotatif avec au moins un élément de fixation (10), lequel élément de fixation (10) présente une bague (11) de diamètre intérieur réglable, **caractérisée en ce que** l'élément de fixation (10) présente en outre un segment de fixation (12) se raccordant latéralement à la bague (11), qu'au moins des segments des arêtes dudit au moins un boîtier (5) de la barrière immatérielle (1) présentent des arrondis (9) qui forment un agencement à symétrie de révolution et une partie réceptrice pour la bague (11) de l'élément de fixation (10), de sorte que lorsque le boîtier (5) est fixé au support rotatif, la paroi intérieure de la bague (11) de l'élément de fixation (10) est directement en contact avec les arrondis (9), l'agencement à symétrie de révolution des arrondis et de la bague (11) de l'élément de fixation (10) permettant d'ajuster par rotation le boîtier (5) respectif situé dans le support rotatif aux fins d'ajustage et de le fixer ensuite en position par resserrement de la bague (11) de l'élément de fixation (10).

2. Combinaison d'un dispositif de fixation selon la revendication 1, **caractérisée en ce que** ledit au moins un boîtier (5) de la barrière immatérielle (1) présente un corps profilé creux (6) sur les arêtes duquel sont prévus les arrondis (9) formant ladite au moins une partie réceptrice.

3. Combinaison d'un dispositif de fixation selon la revendication 2, **caractérisée en ce que** la barrière immatérielle (1) présente une rangée d'émetteurs (3) émettant des rayons lumineux d'émission (2) et une rangée de récepteurs (4) associés aux émetteurs (3) qui sont intégrées dans le corps profilé creux (6) dudit au moins un boîtier (5).

4. Combinaison d'un dispositif de fixation selon la revendication 3, **caractérisée en ce que** la barrière immatérielle (1) présente deux boîtiers (5) avec chaque fois un corps profilé creux (6), une rangée d'émetteurs (3) étant disposée dans un boîtier (5) et une rangée de récepteurs (4) dans l'autre boîtier (5).

5. Combinaison d'un dispositif de fixation selon l'une des revendications 3 ou 4, **caractérisée en ce que** les émetteurs (3) et les récepteurs (4) sont disposés à distance les uns derrière les autres dans la direction longitudinale du corps profilé creux (6) respectif, et que des arrondis (9) d'une partie réceptrice sont disposés dans un plan s'étendant perpendiculairement à la direction longitudinale du corps profilé creux (6).

6. Combinaison d'un dispositif de fixation selon la revendication 5, **caractérisée en ce que** les arrondis (9) formant les parties réceptrices sont disposés sur les bords longitudinaux du ou de chaque corps profilé creux (6).

7. Combinaison d'un dispositif de fixation selon la revendication 6, **caractérisée en ce que** les arrondis (9) formant les parties réceptrices s'étendent chaque fois sur toute les longueurs du ou de chaque corps profilé creux (6).

8. Combinaison d'un dispositif de fixation selon l'une des revendications 4 à 7, **caractérisée en ce que** des ouvertures débouchant aux bords longitudinaux du ou de chaque corps profilé creux (6) peuvent chacune être fermées par un bouchon de fermeture (7).

9. Combinaison d'un dispositif de fixation selon la revendication 8, **caractérisée en ce que** le diamètre extérieur du bouchon de fermeture (7) est dimensionné de façon à ne pas dépasser latéralement du corps profilé creux (6) respectif.

10. Combinaison d'un dispositif de fixation selon l'une des revendications 1 à 9, **caractérisée en ce que** les arrondis (9) formant une partie réceptrice sont situés sur une surface d'enveloppe cylindrique circulaire.

11. Combinaison d'un dispositif de fixation selon la revendication 10, **caractérisée en ce que** les arrondis (9) formant une partie réceptrice, qui sont prévus sur un corps profilé creux (6) du boîtier (5), sont disposés concentriquement par rapport à l'axe longitudinal du corps profilé creux (6).

12. Combinaison d'un dispositif de fixation selon l'une des revendications 1 à 11, **caractérisée en ce que** le corps profilé creux (6) d'un boîtier (5) présente une section transversale carrée.

13. Combinaison d'un dispositif de fixation selon l'une des revendications 1 à 11, **caractérisée en ce que** le corps profilé creux (6) d'un boîtier (5) présente une section transversale rectangulaire.

14. Combinaison d'un dispositif de fixation selon l'une des revendications 1 à 13, **caractérisée en ce que** l'extension des arrondis (9) formant une partie réceptrice dans la direction longitudinale du corps profilé creux (6) correspond au moins à la largeur de la bague (11) de l'élément de fixation (10).

15. Combinaison d'un dispositif de fixation selon l'une des revendications 1 à 14, **caractérisée en ce que** la ou chaque bague (11) d'un élément de fixation (10) est maintenue avec une pression d'application prédéfinie contre une partie réceptrice formée par les arrondis (9).

16. Combinaison d'un dispositif de fixation selon la revendication 15, **caractérisée en ce que** la ou chaque bague (11) d'un élément de fixation (10) présente un collier.

17. Combinaison d'un dispositif de fixation selon l'une des revendications 1 à 16, **caractérisée en ce que** le ou les éléments de fixation (10) peuvent être fixés à une base.
